# EUROPEAN PATENT SPECIFICATION

(11) **EP 2 869 604 B1**
(45) Date of publication and mention of the grant of the patent: **25.05.2016**
(21) Application number: 14180110.0
(22) Date of filing: 06.08.2014
(51) Int. Cl.: H04W 4/00, H04W 4/20, H04L 29/08

(54) **Method, apparatus and device for processing a mobile terminal resource**
Verfahren, Gerät und Vorrichtung zur Verarbeitung einer mobilen Endgeräteressource
Procédé, appareil et dispositif de traitement d'une ressource de terminal mobile

(30) Priority: 31.10.2013 CN 201310530384
(43) Date of publication of application: 06.05.2015
(73) Proprietor: Xiaomi Inc., Beijing 100085 (CN)
(72) Inventor: Han, Mengmeng, Haidian District (CN); Sun, Peng, Haidian District (CN)
(74) Representative: Hanna, Peter William Derek

(56) References cited:
- EP-A1- 1 950 656
- US-A1- 2012 131 570
- US-A1- 2012 159 388

## Description

### CROSS REFERENCE TO RELATED APPLICATION

The present application claims the priority of Chinese patent application No. 201310530384.3, filed on Oct. 31, 2013.

### TECHNICAL FIELD

The present disclosure relates to the field of communication, and more particularly, to a method, an apparatus and a device for processing a mobile terminal resource.

### BACKGROUND

Intelligent mobile phones ("cellphones" for short hereinafter) may download all sorts of resources for cellphones from a cellphone network (e.g. Global System of Mobile communication, "GSM" for short) or Code Division Multiple Access ("CDMA" for short) network, such as pictures, application software, music, videos, etc. Generally, a cellphone is charged based on the data traffic in case of downloading the resources from the cellphone network, but not through Wireless Fidelity ("Wi-Fi" for short).

For example, to save the expenditure on data traffic from cellphone network, a user of a cellphone needs to download the resource required by the cellphone to his Personal Computer ("PC" for short) via the PC, and then the PC sends the downloaded cellphone resource to the cellphone. After receiving the cellphone resource, the user still needs to make some corresponding setting to the cellphone to make use of the cellphone resource. Take setting wallpaper for example, after receiving a picture from the PC, generally, the cellphone may prompt the user so that the user may input an operation instruction of setting the picture as the wallpaper according to the prompt. Then the cellphone performs the operation instruction to finish the setting of the wallpaper. The whole process from downloading of a cellphone resource to make use of the cellphone resource involves a number of operation steps, which is tedious and complicated, and time-consuming for the user.

US20120159388 relates to a method and system for providing in-context applications, a context is selected by a user. Context-specific metadata is retrieved from a context data structure. At least one application identified in the context data structure is loaded for the context. A user interface that includes at least one selectable user interface element is rendered for the context. The selectable user interface element is used to select the at least one loaded application. Based on a determination that a selectable user interface element has been selected, the context-specific metadata is passed to the selected application for use in retrieving context-related data. The context-related data is received via the application.

US20120131570 provides an approach for customizing device content. A content manager receives an input for specifying one or more content items for a device. Next, the content manager determines to detect the device. Then, the content manager determines to initiate installation of the one or more content items at the device based, at least in part, on the detection.

EP 1 950 656 relates to a method of providing connectivity between a mobile device, a desktop computing device and network resources, comprising: providing the mobile device with loader software that can be installed in the desktop computing device to instruct it to download application software from a remote resource and that can provide configuration data to the application software; using the mobile device to detect all desktop computing devices with which the mobile device can communicate; using the mobile device to select one of the desktop computing devices on which the application software is to be installed; transmitting the loader software to the desktop computing device; using the desktop computing device to run the loader software and direct it to the remote resource to download application software and install it using configuration data relating to the mobile device such that the installed application software can be run to provide functionality and connectivity between the mobile device, the desktop computing device and/or remote resources.

### SUMMARY

For solving the problem that there are too many operation steps are involved in downloading a cellphone resource to make use of the cellphone resource in the related art, the present invention provides a method, a device and an apparatus for processing a mobile terminal resource, in accordance with claims which follow. The apparatus includes a client computer, a server and a mobile terminal. The technical solutions are as follows.

According to a first aspect of embodiments of the present disclosure, there is provided a method for processing a mobile terminal resource, including: sending a request for processing the resource to a server by a client computer based on a user command, the request for processing the resource including an ID of the resource and a process manner of the resource; receiving a memory address of the resource and a first instruction returned from the server, the first instruction including an ID of an interface of a mobile terminal application (APP), and the first instruction being used for instructing a mobile terminal to call the interface of the mobile terminal APP to process the resource; and downloading the resource from the memory address of the resource, and sending the downloaded resource and the first instruction to the mobile terminal, so as to allow the mobile terminal to call the interface of the mobile terminal APP to process the resource.

Optionally, the downloading the resource from the memory address of the resource includes: scanning IDs of all mobile terminal APPs installed in the mobile terminal, detecting whether the mobile terminal APP has been installed in the mobile terminal using the ID of the mobile terminal APP sent from the server, and downloading the resource from the memory address of the resource if the mobile terminal APP installed in the mobile terminal is detected.

Optionally, the method further includes: receiving a second instruction sent from the server, the second instruction including the ID of the interface of the mobile terminal APP and the ID of the resource, and the second instruction being used for instructing the mobile terminal to call the interface of the mobile terminal APP to return a processed result of the resource; and sending the second instruction to the mobile terminal, and sending the processed result of the resource returned from the mobile terminal to the server.

According to a second aspect of embodiments of the present disclosure, there is provided a method for processing a mobile terminal resource, including: receiving a request for processing the resource sent from a client computer by a server, the request for processing the resource including an ID of the resource and a process manner of the resource; obtaining, from a preset corresponding relationship between IDs of interfaces of mobile terminal APPs and process manners of resources, an ID of an interface of a mobile terminal APP used to process the resource corresponding to the process manner of the resource, and obtaining, from a preset corresponding relationship between IDs of resources and memory addresses, a memory address of the resource corresponding to the ID of the resource; and generating a first instruction and returning the memory address of the resource and the first instruction to a client computer, the first instruction including the ID of the interface of the mobile terminal APP, and the first instruction being used for instructing a mobile terminal to call the interface of the mobile terminal APP to process the resource.

Optionally, the method further includes: generating a second instruction and sending the second instruction to the client computer, the second instruction including the ID of the interface of the mobile terminal APP and the ID of the resource, and the second instruction being used for instructing the mobile terminal to call the interface of the mobile terminal APP to return a processed result of the resource.

According to a third aspect of embodiments of the present disclosure, there is provided a method for processing a mobile terminal resource, including: receiving the resource and a first instruction sent from a client computer, by a mobile terminal, the first instruction including an ID of an interface of a mobile terminal APP, and the first instruction being used for instructing the mobile terminal to call the interface of the mobile terminal APP to process the resource; and calling the interface of the mobile terminal APP to process the resource using the first instruction.

Optionally, the method further includes: receiving a second instruction sent from the client computer, the second instruction including the ID of the interface of the mobile terminal APP and the ID of the resource, and the second instruction being used for instructing the mobile terminal to call the interface of the mobile terminal APP to return a processed result of the resource; and calling the interface of the mobile terminal APP to return the processed result of the resource, and sending the processed result of the resource to the client computer by following the second instruction.

According to a fourth aspect of embodiments of the present disclosure, there is provided an apparatus for processing a mobile terminal resource, including: a sending module configured to send a request for processing the resource to a server based on a user command, the request for processing the resource including an ID of the resource and a process manner of the resource; a first receiving module configured to receive a memory address of the resource and a first instruction returned from the server, the first instruction including an ID of an interface of a mobile terminal APP to process the resource, and the first instruction being used for instructing a mobile terminal to call the interface of the mobile terminal APP to process the resource; and a downloading module configured to download the resource from the memory address of the resource, and send the downloaded resource and the first instruction to the mobile terminal, so as to allow the mobile terminal to call the interface of the mobile terminal APP to process the resource.

Optionally, the downloading module is further configured to scan IDs of all mobile terminal APPs installed in the mobile terminal, detect whether the mobile terminal APP is installed in the mobile terminal using the ID of the mobile terminal APP sent from the server, if the mobile terminal APP is detected installed in the mobile terminal, then download the resource from the memory address of the resource, and send the downloaded resource and the first instruction to the mobile phone so as to allow the mobile terminal call the interface of the mobile terminal APP to process the resource.

Optionally, the first receiving module is further configured to receive the second instruction, which includes the ID of the interface of the mobile terminal APP and the ID of the resource and is used for instructing the mobile terminal to call the interface of the mobile terminal APP to return a processed result of the resource, sent from the server, sends the second instruction to the mobile terminal, and then sends the processed result of the resource returned from the mobile terminal to the server.

According to a fifth aspect of embodiments of the present disclosure, there is provided an apparatus for processing a mobile terminal resource, including: a second receiving module configured to receive a request for processing the resource sent from a client computer, the request for processing the resource including an ID of the resource and a process manner of the resource; an obtaining module configured to obtain, from a preset corresponding relationship between IDs of interfaces of mobile terminal APPs and process manners of resources, an ID of an interface of a mobile terminal APP used to process the resource corresponding to the process manner of the resource, and obtain, from a preset corresponding relationship between IDs of resources and memory addresses, a memory address of the resource corresponding to the ID of the resource; and a returning module configured to generate a first instruction and return the memory address of the resource and the first instruction to a client computer, the first instruction including the ID of the interface of the mobile terminal APP, and the first instruction being used for instructing a mobile terminal to call the interface of the mobile terminal APP to process the resource.

Optionally, the returning module is further configured to generate a second instruction and send the second instruction to the client computer, the second instruction including the ID of the interface of the mobile terminal APP and the ID of the resource, and the second instruction being used for instructing the mobile terminal to call the interface of the mobile terminal APP to return a processed result of the resource.

According to a sixth aspect of embodiments of the present disclosure, there is provided an apparatus for processing a mobile terminal resource, including: a third receiving module configured to receive the resource and a first instruction sent from a client computer, the first instruction including an ID of an interface of a mobile terminal APP, and the first instruction being used for instructing the mobile terminal to call the interface of the mobile terminal APP to process the resource; and a calling module configured to call the interface of the mobile terminal APP to process the resource using the first instruction.

Optionally, the third receiving module is further configured to receive a second instruction sent from the client computer, the second instruction including the ID of the interface of the mobile terminal APP and the ID of the resource, and the second instruction being used for instructing the mobile terminal to call the interface of the mobile terminal APP to return a processed result of the resource; and the calling module is further configured to call the interface of the mobile terminal APP to return the processed result of the resource, and send the processed result of the resource to the client computer by following the second instruction.

According to a seventh aspect of embodiments of the present disclosure, there is provided a client computer, including a processor, a memory, and one or more programs, wherein the one or more programs are stored in the memory and are configured to be executed by one or more the processors, the one or more programs including instructions for the performing the following operations: sending a request for processing the resource to a server based on a user command, the request for processing the resource including an ID of the resource and a process manner of the resource; receiving a memory address of the resource and a first instruction returned from the server, the first instruction including an ID of an interface of a mobile terminal APP, and the first instruction being used for instructing a mobile terminal to call the interface of the mobile terminal APP to process the resource; and downloading the resource from the memory address of the resource, and sending the downloaded resource and the first instruction to the mobile terminal, so as to allow the mobile terminal to call the interface of the mobile terminal APP to process the resource.

According to an eighth aspect of embodiments of the present disclosure, there is provided a server, including a processor, a memory, and one or more programs, wherein the one or more programs are stored in the memory and are configured to be executed by one or more the processors, the one or more programs including instructions for the performing the following operations: receiving a request for processing the resource sent from a client computer, the request for processing the resource including an ID of the resource and a process manner of the resource; obtaining, from a preset corresponding relationship between IDs of interfaces of mobile terminal APPs and process manners of resources, an ID of an interface of a mobile terminal APP used to process the resource corresponding to the process manner of the resource, and obtaining, from a preset corresponding relationship between IDs of resources and memory addresses, a memory address of the resource corresponding to the ID of the resource; and generating a first instruction and returning the memory address of the resource and the first instruction to a client computer, the first instruction including the ID of the interface of the mobile terminal APP, and the first instruction being used for instructing a mobile terminal to call the interface of the mobile terminal APP to process the resource.

According to a ninth aspect of embodiments of the present disclosure, there is provided a mobile terminal, including a processor, a memory, and one or more programs, wherein the one or more programs are stored in the memory and are configured to be executed by one or more the processors, the one or more programs including instructions for the performing the following operations: receiving the resource and a first instruction sent from a client computer, the first instruction including an ID of an interface of a mobile terminal APP, and the first instruction being used for instructing the mobile terminal to call the interface of the mobile terminal APP to process the resource; and calling the interface of the mobile terminal APP to process the resource using the first instruction.

According to a tenth aspect of embodiments of the present disclosure, there is provided a program product having stored therein instructions that, when executed by one or more processors of the mobile terminal according to claim 17, causes the mobile terminal to perform:

receiving the resource and a first instruction sent from a client computer, the first instruction comprising an ID of an interface of a mobile terminal APP, and the first instruction being used for instructing the mobile terminal to call the interface of the mobile terminal APP to process the resource; and

calling the interface of the mobile terminal APP to process the resource by following the first instruction.

Some advantageous effects of the present disclosure may include: receiving a memory address of the resource and a first instruction returned from the server by a client computer, downloading the resource from the memory address of the resource, sending the downloaded resource and the first instruction to the mobile terminal. After receiving the resource and the first instruction, the mobile terminal may, by following the first instruction, automatically call the interface corresponding to the ID of the interface of the mobile terminal APP to process the resource so as to finish the use of the resource. This can simplify operation steps involved from downloading of a mobile terminal resource to make use of the mobile terminal resource, thereby saving time for user.

It is to be understood that both the foregoing general description and the following detailed description are exemplary only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a view illustrating an applicable scene of a solution according to an exemplary embodiment.
Fig. 2 is an illustrative flow chart showing a method for processing a mobile terminal resource according to an exemplary embodiment.
Figs. 3-5 illustrate another flow chart showing a method for processing a mobile terminal resource according to an exemplary embodiment.
Fig. 6 is a block diagram illustrating a device for processing a mobile terminal resource according to an exemplary embodiment.
Fig. 7 is a block diagram illustrating a client computer according to an exemplary embodiment.
Fig. 8 is a block diagram illustrating a device for processing a mobile terminal resource according to an exemplary embodiment.
Fig. 9 is a block diagram illustrating a server according to an exemplary embodiment.
Fig. 10 is a block diagram illustrating a device for processing a mobile terminal resource according to an exemplary embodiment.
Fig. 11 is a block diagram illustrating a mobile terminal according to an exemplary embodiment.

From the drawings some embodiments of the present disclosure have been illustrated clearly, and the more detailed descriptions will be given hereinafter. These drawings are intended to explain the principle of the present disclosure with reference to some specific embodiments to those skilled in the art.

### DESCRIPTION OF THE EMBODIMENTS

To make the objects, technical solutions and advantages of the present disclosure more apparent, the present disclosure will be described hereafter in detail with reference to the embodiments and drawings.

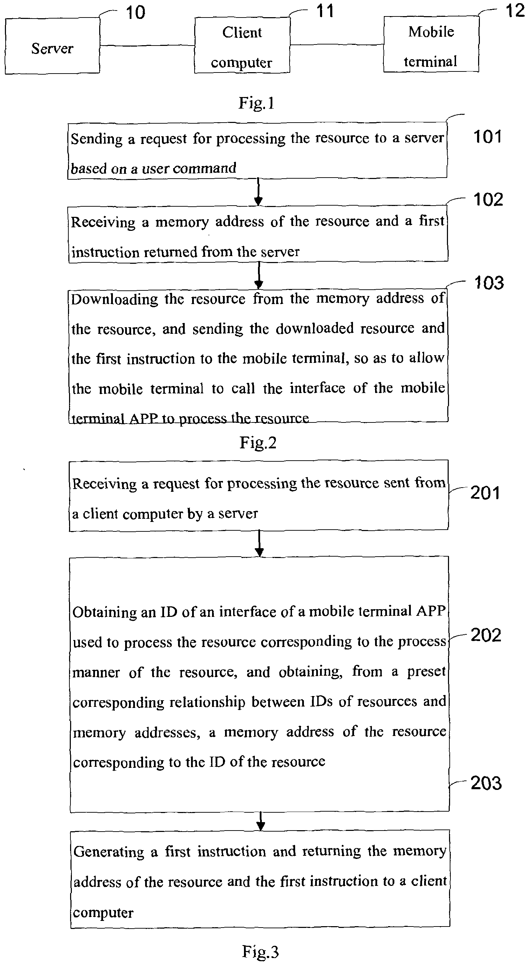

An applicable scene of a solution according to an exemplary embodiment of the present disclosure is shown in Fig. 1. Fig. 1 shows that a server 10 is connected to a client computer 11, which is further connected to a mobile phone 12. The server 10 stores all sorts of mobile terminal resources, such as pictures, videos, e-books, music and application programs etc. The client computer 11 and the server 10 constitute a computer network, which provides access to the mobile terminal resources stored in the server 10 and allow the mobile terminal resources to be downloaded therefrom. The mobile terminal 12 may establish a connection through Universal Serial Bus ("USB" for short) or Wi-Fi. Besides providing the downloaded mobile terminal resource to the mobile phone 12, the client computer 11 may also manage the mobile phone 12, such as make a comprehensive management to the system files, short messages and contacts of the mobile phone 12, and backup and restore the important data in the mobile phone 12 at any time. The client computer 11 may include a desktop computer, a notebook computer etc, and the mobile phone 12 may include an intelligent mobile phone, a tablet PC, etc.

It should be noted that in the embodiments of the present disclosure, mobile terminal resources may be the resources which can be provided via the computer network and then be processed by mobile terminal Applications ("APP" for short), including, but not limited to, pictures, videos, e-books, music and application programs etc., and the process to the resource includes, but is not limited to, setting a picture as a wallpaper, playing a video, browsing a E-book, setting a piece of music as a ringtone, and installing an application program, etc.. The Mobile terminal APP may be any sort of application software supported on the corresponding operation system of the mobile terminal, including, but not limited to an APP for setting a picture as a wallpaper, an APP for playing a video, an APP for browsing a E-book, an APP for setting a piece of music as a ringtone, or an APP for installing an application program.

The embodiments of the present disclosure provide a method, a device and an apparatus for processing a mobile terminal resource. The apparatus includes a client computer, a server and a mobile terminal. The detailed description will be given with reference to the accompanying drawings.

Fig. 2 shows a method for processing a mobile terminal resource according to an embodiment of the present disclosure, which may be implemented by a client computer, as shown in Fig. 2. The method includes following steps.

In step 101, a request for processing the resource to a server based on a user command is sent.

The request for processing the resource includes an ID of the resource and a process manner of the resource.

In step 102, receiving a memory address of the resource and a first instruction returned from the server.

The first instruction includes an ID of an interface of a mobile terminal APP to process the resource, and the first instruction is used for instructing a mobile terminal to call the interface of the mobile terminal APP to process the resource.

In step 103, downloading the resource from the memory address of the resource, and sending the downloaded resource and the first instruction to the mobile terminal, so as to allow the mobile terminal to call the interface of the mobile terminal APP to process the resource.

This embodiment of the present disclosure may include receiving a memory address of the resource and a first instruction returned from the server by a client computer, downloading the resource from the memory address of the resource, and sending the downloaded resource and the first instruction to the mobile terminal. After receiving the resource and the first instruction, the mobile terminal may, by following the first instruction, automatically call the interface corresponding to the ID of the interface of the mobile terminal APP to process the resource so as to finish the use of the resource. This can simplify operation steps involved from downloading of a mobile terminal resource to make use of the mobile terminal resource, thereby saving time for user.

Fig. 3 shows another method for processing a mobile terminal resource according to an embodiment of the present disclosure, which may be implemented by a server. As shown in Fig. 3. the method includes the following steps.

In step 201, receiving a request for processing the resource sent from a client computer.

The request for processing the resource includes an ID of the resource and a process manner of the resource.

In step 202, obtaining, from a preset corresponding relationship between IDs of interfaces of mobile terminal APPs and process manners of resources, an ID of an interface of a mobile terminal APP used to process the resource corresponding to the process manner of the resource, and obtaining, from a preset corresponding relationship between IDs of resources and memory addresses, a memory address of the resource corresponding to the ID of the resource contained in the request for processing the resource.

In step 203, generating a first instruction and returning the obtained memory address of the resource and the first instruction to a client computer.

The first instruction includes the ID of the interface of the mobile terminal APP used to process the resource, and the first instruction is used for instructing a mobile terminal to call the interface of the mobile terminal APP to process the resource.

This embodiment of the present disclosure may include receiving a memory address of the resource and a first instruction returned from the server by a client computer, downloading the resource from the memory address of the resource, and sending the downloaded resource and the first instruction to the mobile terminal. After receiving the resource and the first instruction, the mobile terminal may, by following the first instruction, automatically call the interface corresponding to the ID of the interface of the mobile terminal APP to process the resource so as to finish the use of the resource. This can simplify operation steps involved from downloading of a mobile terminal resource to make use of the mobile terminal resource, thereby saving time for user.

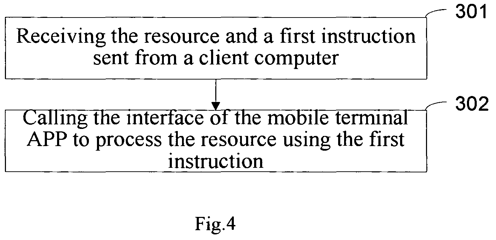

Fig. 4 shows another method for processing a mobile terminal resource according to an embodiment of the present disclosure, which may be implemented by a mobile terminal. As shown in Fig. 4. the method includes the following steps.

In step 301, receiving a resource and a first instruction sent from a client computer.

The first instruction includes the ID of the interface of the mobile terminal APP used to process the resource, and the first instruction is used for instructing the mobile terminal to call the interface of the mobile terminal APP to process the resource.

In step 302, calling the interface of the mobile terminal APP to process the resource by following the first instruction.

This embodiment of the present disclosure may include receiving a memory address of the resource and a first instruction returned from the server by a client computer, downloading the resource from the memory address of the resource, and sending the downloaded resource and the first instruction to the mobile terminal. After receiving the resource and the first instruction, the mobile terminal may, by following the first instruction, automatically call the interface corresponding to the ID of the interface of the mobile terminal APP to process the resource so as to finish the use of the resource. This can simplify operation steps involved from downloading of a mobile terminal resource to make use of the mobile terminal resource, thereby saving time for user.

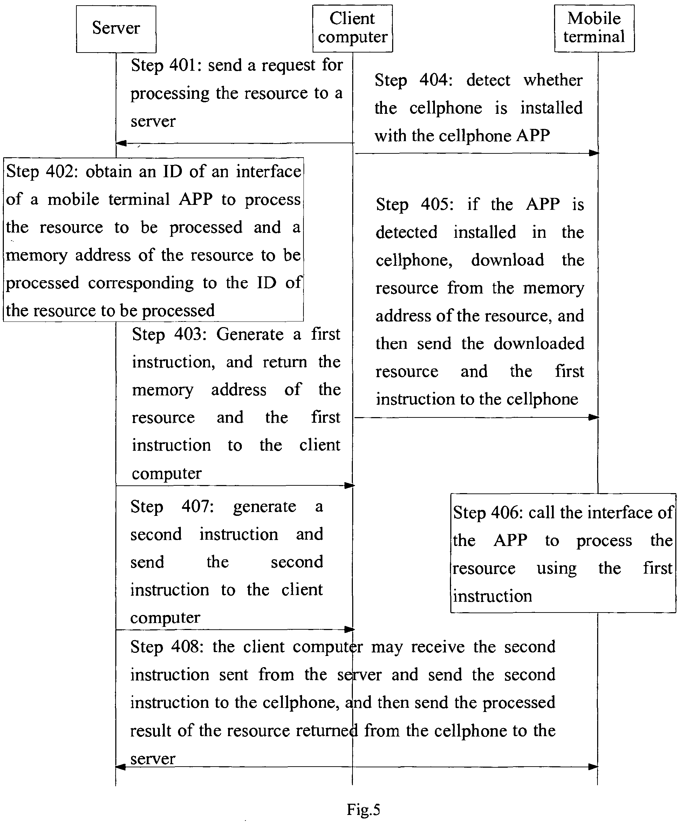

Fig. 5 shows yet another method for processing a mobile terminal resource according to an embodiment of the present disclosure. In this embodiment, the method for processing a mobile terminal resource will be given in detail with a cellphone as an example of the mobile phone. As shown in Fig. 5, the method may include the following steps.

In step 401, sending a request for processing the resource to a server based on a user command by a client computer.

The request for processing the resource includes an ID of the resource and a process manner of the resource;

Optionally, the user may connect the cellphone to the client computer. The client computer is installed with an application (such as "cellphone assistant") for managing cellphone so that the user may manage the cellphone using the application. Meanwhile, the user may access websites which provide all sorts of cellphone resource using the application software. The user may browse resources displayed on websites, select a resource required to be processed by the mobile phone, and issue commands of processing the selected resource to the application. The application software then sends a request for processing the resource to a server based on the user commands.

Suppose that the user plans to download a picture from the website, and hope taking the downloaded picture as the desktop wallpaper of the cellphone immediately. The user may browse pictures displayed on webpages in websites to search for his or her favorite picture. If the user finds his or her favorite picture, the user may select the picture and click on the button "set downloaded picture as desktop wallpaper of cellphone immediately" below the picture, so as to trigger a desktop wallpaper set request. The request may include an ID of the selected picture and the process manner of the picture (i.e. set picture as cellphone wallpaper).

In step 402, the server may obtain an ID of an interface of a mobile terminal APP to process the resource to be processed and a memory address of the resource to be processed corresponding to the ID of the resource to be processed.

After receiving the request for processing the resource sent from a client computer, the a server may obtain, from a preset corresponding relationship between IDs of interfaces of cellphone APPs and process manners of resources, an ID of an interface of a cellphone APP used to process the resource to be processed corresponding to the process manner of the resource to be processed, and obtain, from a preset corresponding relationship between IDs of resources and memory addresses, a memory address of the resource to be processed corresponding to the ID of the resource to be processed.

For example, the request for processing a resource received by the server is the aforesaid request of setting desktop wallpaper. From a preset corresponding relationship between IDs of resources and memory addresses, the memory address corresponding to the ID of the picture carried in the request of setting desktop wallpaper is obtained. The picture is stored at the memory address. Meanwhile, from a preset corresponding relationship between IDs of interfaces of cellphone APPs and process manners of resources, the server may obtain the ID of the interface of a cellphone APP corresponding to the process manner of the picture carried in the request of setting desktop wallpaper, i.e. the ID of the interface of the APP which can set a picture as a desktop wallpaper. For another example, the request for processing a resource received by the server is a request of installing specified APP, which may carry an ID of a specified APP and a process manner of the specified APP (i.e. installing the specified APP). From a preset corresponding relationship between IDs of resources and memory addresses, the memory address corresponding to the ID of the specified APP is obtained. An Android Package of the APP is stored at the memory address. Meanwhile, from a preset corresponding relationship between IDs of interfaces of cellphone APPs and process manners of resources, the server may obtain the ID of the interface of a cellphone APP corresponding to the process manner of the specified APP, i.e. the ID of the interface of the APP.

Optionally, network maintenance personnel may establish a corresponding relationship between IDs of interfaces of cellphone APPs and process manners of resources in advance. Before the establishment, the network maintenance personnel of the server may negotiate the corresponding relationship with the development personnel of cellphone APPs. It is to be noted that in this embodiment of the present disclosure, the ID of an interface of a cellphone APP is used to uniquely identify the interface of the cellphone APP. That is, IDs of different interfaces of a cellphone are different from each other. For example, an APP setting wallpaper may include an interface of setting desktop wallpaper and an interface of setting lock screen wallpaper. Besides, different cellphones have different interface IDs.

Optionally, Step 402 may further include: the server may obtain, from a preset corresponding relationship between IDs of interfaces of cellphone APPs and process manners of resources, an ID of a cellphone APP corresponding to the resource, and send the obtained ID of a cellphone APP corresponding to the resource to the client computer.

In step 403, the server may generate a first instruction, and return the memory address of the resource and the first instruction to the client computer.

The first instruction may include an ID of an interface of a cellphone APP, and the first instruction is used for instructing a cellphone to call the interface of the cellphone APP to process the resource.

For example, after obtaining the memory address of a picture and the ID of APP of setting picture as desktop wallpaper, the server may generate a first instruction including the ID of the interface of the APP of setting picture as desktop wallpaper, then the memory address of the picture and the first instruction are returned to the client computer.

In step 404, the client computer may receive the ID of the cellphone APP corresponding to the resource sent from the server, and detect whether the cellphone is installed with the cellphone APP.

If the cellphone APP is detected installed in the cellphone, then go to step 405; and if the cellphone APP is detected not installed in the cellphone, then terminate the process.

Optionally, after receiving the ID of the cellphone APP corresponding to the resource sent from the server, the client computer may scan IDs of all APPs installed in the cellphone, to determine whether the APP is present in all of the APPs. If the APP is installed in the cellphone, then go to step 405; and if the APP is not installed in the cellphone, then terminate the process.

In step 405, the client computer may download the resource from the memory address of the resource, and then send the downloaded resource and the first instruction to the cellphone.

Optionally, if the APP is detected installed in the cellphone, the client computer may download the picture from the memory address of the picture, and then send the downloaded picture and the first instruction to the cellphone.

In step 406, the cellphone may receive the resource and the first instruction sent from a client computer, and then call the interface of the APP to process the resource by following the first instruction.

Optionally, after receiving the downloaded picture and the first instruction sent from a client computer, the cellphone may call the interface of the APP of setting picture as desktop wallpaper, so as to set the downloaded picture as a desktop wallpaper.

In step 407, the server may generate a second instruction and send the second instruction to the client computer.

The second instruction may include the ID of the interface of the cellphone APP and the ID of the resource, and the second instruction is used for instructing the cellphone to call the interface of the cellphone APP to return a processed result of the resource.

The processed result of the resource can indicate whether the cellphone has processed the resource. Optionally, the sequences of performing the step 407 and the step 408 are not defined in this embodiment. For example, the step 407 and the step 408 can be performed simultaneously. The server may carry the second instruction while returning the first instruction to the client computer (see step 403).

Suppose the server packages the address of the picture, the first instruction and the second instruction into a piece of command and sends it to the client computer. The command is:

callService("setWallpaper",setWallPaperCallback(result){},"http://example.com/moun tain.jpg"), wherein, "setWallpaper" indicates ID of the interface of setting desktop wallpaper, "http://example.com/mountain.jpg" is the memory address of the picture, "callService" indicates calling the interface " setWallpaper " to process the picture , "setWallPaperCallback(result){}" indicates calling the interface "setWallpaper" to return the processed result of the picture. The "setWallPaperCallback" may be the callback function.

In step 408, the client computer may receive the second instruction sent from the server and send the second instruction to the cellphone, and then send the processed result of the resource returned from the cellphone to the server.

Optionally, the cellphone may return the processed result of the resource to the client computer by following the second instruction sent from the client computer. The client computer may send the processed result of the resource to the server after receiving the processed result of the resource.

This embodiment of the present disclosure may include receiving a memory address of the resource and a first instruction returned from the server by a client computer, downloading the resource from the memory address of the resource, and sending the downloaded resource and the first instruction to the mobile terminal. After receiving the resource and the first instruction, the mobile terminal may, by following the first instruction, automatically call the interface corresponding to the ID of the interface of the mobile terminal APP to process the resource so as to finish the use of the resource. This can simplify operation steps involved from downloading of a mobile terminal resource to make use of the mobile terminal resource, thereby saving time for user.

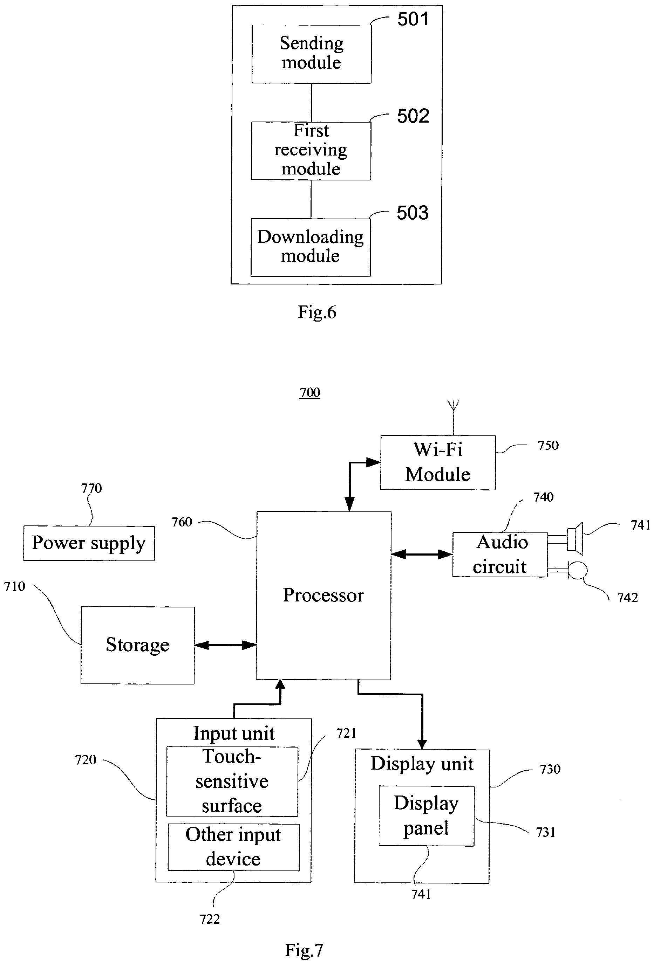

Fig. 6 shows a device for processing a mobile terminal resource according to an embodiment of the present disclosure. As shown in Fig. 6, the device includes the following modules.

A sending module 501 is configured to send a request for processing the resource to a server. The request for processing the resource includes an ID of the resource and a process manner of the resource.

A first receiving module 502 is configured to receive a memory address of the resource and a first instruction returned from the server. The first instruction includes an ID of an interface of a mobile terminal APP to process the resource, and the first instruction is used for instructing a mobile terminal to call the interface of the mobile terminal APP to process the resource.

A downloading module 503 is configured to download the resource from the memory address of the resource, and send the downloaded resource and the first instruction to the mobile terminal, so as to allow the mobile terminal to call the interface of the mobile terminal APP to process the resource.

Optionally, the downloading module 503 is configured to scan IDs of all mobile terminal APPs installed in the mobile terminal, detect whether the mobile terminal APP is installed in the mobile terminal using the ID of the mobile terminal APP sent from the server, if the mobile terminal APP is detected installed in the mobile terminal, then download the resource from the memory address of the resource, and send the downloaded resource and the first instruction to the mobile phone so as to allow the mobile terminal call the interface of the mobile terminal APP to process the resource.

Optionally, the first receiving module 502 is further configured to receive the second instruction sent from the server, which may include the ID of the interface of the mobile terminal APP and the ID of the resource and is used for instructing the mobile terminal to call the interface of the mobile terminal APP to return a processed result of the resource, send the second instruction to the mobile terminal, and then send the processed result of the resource returned from the mobile terminal to the server.

Optionally, the device shown in Fig. 6 may be provided in the client computer 11 shown in Fig. 1.

This embodiment of the present disclosure may include receiving a memory address of the resource and a first instruction returned from the server by a client computer, downloading the resource from the memory address of the resource, and sending the downloaded resource and the first instruction to the mobile terminal. After receiving the resource and the first instruction, the mobile terminal may, by following the first instruction, automatically call the interface corresponding to the ID of the interface of the mobile terminal APP to process the resource so as to finish the use of the resource. This can simplify operation steps involved from downloading of a mobile terminal resource to make use of the mobile terminal resource, thereby saving time for user.

Fig. 7 is a block diagram illustrating a client computer (such as the client computer 11 shown in Fig. 1 according to an exemplary embodiment of the present disclosure. Referring to Fig. 7, the client computer may be used for implementing the method provided in the above embodiments. The following descriptions are optionally.

The client computer 700 may include: a memory 710 of one or more computer readable storage media, an input unit 720, a display unit 730, an audio circuit 740, a WIFI (Wireless Fidelity) module 750, a processor 760 including one or more process cores, and a power source 770 and the like. Those skilled in the present art may understand that the structure of the client computer as shown in this drawing is not restrictive to the client computer, and it may include more or less components than those in the figures, or a combination of some components, or different component arrangements.

The memory 710 may be configured to store software programs and modules, which allow various types of functional applications and data processes to be performed when executed by the processor 760. The memory 710 may mainly include a program storage area and a data storage area. Wherein the program storage area may store an operation system, applications required by at least one required functions (such as voice play function, image play function and the like), and the data storage area may store data (such as video data, phonebook data and the like) created by the use of the client computer 700. Besides, the memory 710 may include a high speed random access memory, or further include a non-volatile memory, such as at least a magnetic disk storage device, a flash memory, or other volatile solid-state storage device. Correspondingly, the memory 710 may further include a memory controller to provide accesses from the processor 760 and the input unit 720 to the memory 720.

The input unit 720 may be configured to receive input numerical or character information and generate signal inputs of a keypad, a mouse, an operation rod, optical or trackball related to user settings and function control. Optionally, the input unit 720 may include a touch sensitive surface 721 and other type of input device 722. The touch sensitive surface 721, or touch display screen or touchpad, may collect touch operations on or near it by the user (for example the user operations on or near the touch sensitive surface 721 with any kind of suitable objects or attachments such as the finger, touch pen, and the like), and drive the corresponding connection device according to a preset program. Optionally, the touch sensitive surface 721 may include two parts, i.e., a touch detection device and a touch controller. The touch detection device may detect the touch orientation of the user, and detect the signal caused by the touch operation, and then transmit the signal to the touch controller. The touch controller may receive touch information from the touch detection device, convert it into coordinates of touch points to send to the processor 760, and can receive the command sent from the processor 760 to execute it. Besides, the touch sensitive surface 721 may be realized with various types such as resistive, capacitive, infrared, or surface acoustic wave and the like. Besides the touch sensitive surface 721, the input unit 720 may further include other type of input device 722. Optionally, the other input device 722 may include, without limitation, one or more of a physical keypad, functional buttons (such as volume control buttons, switch buttons and the like), a trackball, a mouse, an operating rod and the like.

The display unit 730 may be configured to display various kinds of graphic user interfaces of information input by the user or provided to the user or the client computer 700. These graphic user interfaces may be made up of graphics, texts, icons, videos and any other combination thereof. The display unit 730 may include a display panel 731, optionally, LCD (Liquid Crystal Display), OLED (Organic Light-Emitting Diode) or the like to assemble the display panel 731. Further, the touch sensitive surface 721 may be configured to cover the display panel 731. When detecting a touch operation on or near the touch sensitive surface 721, the touch sensitive surface 721 may send signals to the processor to determine the type of the touch event. Thereafter, the processor 760 may provide a corresponding visual output on the display panel 731 according to the type of the touch event. Although in Figure 7, the touch sensitive surface 721 and the display panel 731 are two independent components for realizing the input and output functions, they can be integrated together in some embodiments to realize the input and output functions.

The audio circuit 740 may include a speaker 741 and a microphone 742. The microphone 742 may provide an audio interface between the user and the client computer 700. The audio circuit 740 may transmit the electrical signal converted from the received audio data to the loudspeaker 741 to be converted into a voice signal output. On the other hand, the microphone 742 converts the collected voice signals into electrical signals, the audio circuit 740 receives the electrical signals and then converts them into audio data, then outputs the audio data to the processor 760 to be processed and transmitted to for example another client computer, or outputs the audio data to the memory 720 so as to be further processed. The audio circuit 740 may further include an earplug jack to provide communication between an external earphone and the client computer 700.

In order to achieve wireless communication, the client computer may be configured with a wireless communication unit 770 thereon. The wireless communication unit 770 may be a WIFI module. WIFI belongs to short-range wireless transmission technology. The client computer 700 may help the user transmit or receive E-mails, browse web pages and access streaming media and the like through the wireless communication unit 770, which provides the user the wireless broadband internet access. Although the wireless communication unit 770 is shown in the drawings, it should be understood that, it does not belong to the necessary component of the client computer 700, and may be omitted according to requirements within the scope without changing the substance of the present disclosure.

The processor 760 is a control center of the client computer 700 using various interfaces and wires to connect respective portions of the whole client computer. By running or executing software programs and/or modules stored in the memory 710, calling data stored in the memory 710, and executing various functions of the client computer 700 and processing data, the processor 760 proceeds overall monitoring to the client computer. Optionally, the processor 780 may include one or more processing cores. Optionally, the processor 780 may integrate application processors and modem processors, wherein the application processors may mainly process the operation systems, the user interfaces, the application programs and the like, and the modem processors may mainly process wireless communications. It should be understood that, the above modem processors may not be integrated into the processor 760.

The client computer 700 further includes a power supply 770 (for example, a battery) to supply power to respective component. Optionally, the power supply may be logically connected with the processor 760 through a power supply management system, thereby realizing functions of managing charging, discharging, power consumption and the like through the power supply management system. The power supply 770 may further include arbitrary components such as one or more DC or AC power supplies, a rechargeable system, a power supply malfunction detection circuit, a power supply converter or an inverter, a power supply state indicator and the like.

Although not shown, the client computer 700 may further include a camera, a Bluetooth module or the like, which is not described repeatedly. In the present embodiment, the client computer 700 may further include a memory, a processor and one or more programs stored in the memory, wherein the one or more programs are configured to be executed by one or more processors, and include instructions of performing operations of the following two aspects.

Sending a request for processing the resource to a server, the request for processing the resource including an ID of the resource and a process manner of the resource; receiving a memory address of the resource and a first instruction returned from the server, the first instruction including an ID of an interface of a mobile terminal APP, and the first instruction being used for instructing a mobile terminal to call the interface of the mobile terminal APP to process the resource; and downloading the resource from the memory address of the resource, and sending the downloaded resource and the first instruction to the mobile terminal, so as to allow the mobile terminal to call the interface of the mobile terminal APP to process the resource.

Optionally, the processor may be further configured to scan IDs of all mobile terminal APPs installed in the mobile terminal, detect whether the mobile terminal APP is installed in the mobile terminal using the ID of the mobile terminal APP sent from the server, if the mobile terminal APP is detected installed in the mobile terminal, then download the resource from the memory address of the resource, and send the downloaded resource and the first instruction to the mobile phone so as to allow the mobile terminal call the interface of the mobile terminal APP to process the resource.

Optionally, the processor may be further configured to receive the second instruction, which may include the ID of the interface of the mobile terminal APP and the ID of the resource and is used for instructing the mobile terminal to call the interface of the mobile terminal APP to return a processed result of the resource, sent from the server, send the second instruction to the mobile terminal, and then send the processed result of the resource returned from the mobile terminal to the server.

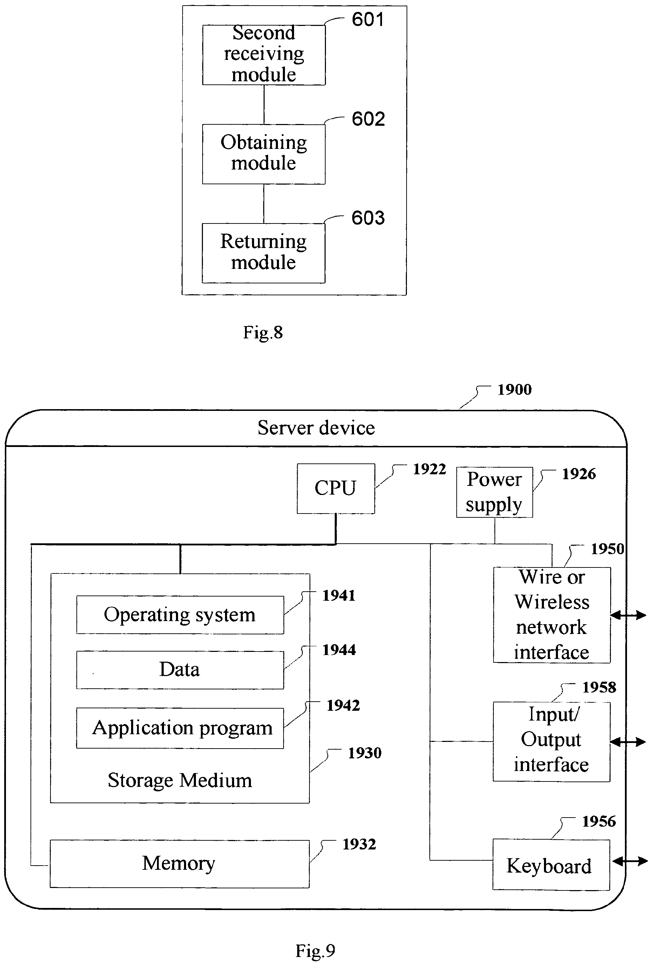

Fig. 8 shows another device for processing a mobile terminal resource according to an embodiment of the present disclosure. As shown in Fig. 8, the device includes the following modules.

A second receiving module 601 may be configured to receive a request for processing the resource sent from a client computer, the request for processing the resource including an ID of the resource and a process manner of the resource.

An obtaining module 602 may be configured to obtain, from a preset corresponding relationship between IDs of interfaces of mobile terminal APPs and process manners of resources, an ID of an interface of a mobile terminal APP used to process the resource corresponding to the process manner of the resource, and obtain, from a preset corresponding relationship between IDs of resources and memory addresses, a memory address of the resource corresponding to the ID of the resource.

A returning module 603 may be configured to generate a first instruction and return the memory address of the resource and the first instruction to a client computer, the first instruction including the ID of the interface of the mobile terminal APP, and the first instruction being used for instructing a mobile terminal to call the interface of the mobile terminal APP to process the resource.

The returning module 603 may be further configured to generate a second instruction and send the second instruction to the client computer, the second instruction including the ID of the interface of the mobile terminal APP and the ID of the resource, and the second instruction being used for instructing the mobile terminal to call the interface of the mobile terminal APP to return a processed result of the resource.

Optionally, the device as shown in Fig. 8 may be provided in the server 10 as shown in Fig. 1.

This embodiment of the present disclosure may include receiving a memory address of the resource and a first instruction returned from the server by a client computer, downloading the resource from the memory address of the resource, and sending the downloaded resource and the first instruction to the mobile terminal. After receiving the resource and the first instruction, the mobile terminal may, by following the first instruction, automatically call the interface corresponding to the ID of the interface of the mobile terminal APP to process the resource so as to finish the use of the resource. This can simplify operation steps involved from downloading of a mobile terminal resource to make use of the mobile terminal resource, thereby saving time for user.

Fig. 9 is a block diagram illustrating a server (such as the server 11 shown in Fig. 1 according to an exemplary embodiment of the present disclosure. Referring to Fig. 9, the server may be used for implementing the method provided in the above embodiments. The following definitions are optional.

The server 1900 may be relatively large due to different configuration or properties, and may include one or more CPU (central processing unit) 1922 (e.g., one or more processors) and a memory 1932, one or more storage media 1930 storing application programs 1942 or data 1944 (e.g., one or more mass storage devices) . The storage medium 1930 and the memory 1932 may store temporarily or permanently. The program stored in storage medium 1930 may include one or more modules (not shown in this drawing), each module may include a series of instructions for operating the server. Further, the CPU 1922 may be configured to communicate with the store medium 1930, a series of instructions of the storage medium 1930 are executed on the server 1900.

The server 1900 may also include one or more power sources 1926 , one or more wired or wireless network interfaces 1950 , one or more input-output interfaces 1958 , one or more keyboards 1956, and/or one or more operating systems 1941 such as Windows Server™, Mac OS X™, Unix™, Linux™, FreeBSD™ and the like.

The server 700 may include a memory, a processor and one or more programs stored in the memory, wherein the one or more programs are configured to be executed by one or more processors, and include instructions of performing the following operations.

Receiving a request for processing the resource sent from a client computer, the request for processing the resource including an ID of the resource and a process manner of the resource; obtaining, from a preset corresponding relationship between IDs of interfaces of mobile terminal APPs and process manners of resources, an ID of an interface of a mobile terminal APP used to process the resource corresponding to the process manner of the resource, and obtaining, from a preset corresponding relationship between IDs of resources and memory addresses, a memory address of the resource corresponding to the ID of the resource; and generating a first instruction and returning the memory address of the resource and the first instruction to a client computer, the first instruction including the ID of the interface of the mobile terminal APP, and the first instruction being used for instructing a mobile terminal to call the interface of the mobile terminal APP to process the resource.

Optionally, the CPU may be further configured to generate a second instruction and send the second instruction to the client computer, the second instruction including the ID of the interface of the mobile terminal APP and the ID of the resource, and the second instruction being used for instructing the mobile terminal to call the interface of the mobile terminal APP to return a processed result of the resource.

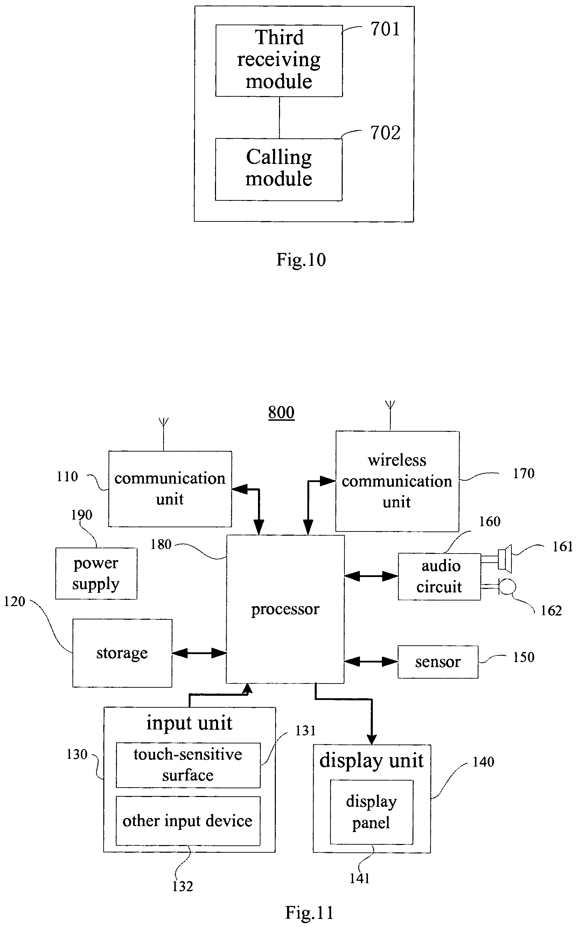

Fig. 10 shows yet another device for processing mobile terminal resource according to an exemplary embodiment of the present disclosure. Referring to Fig. 10, the device may include the following modules.

A third receiving module 701 is configured to receive the resource and a first instruction downloaded from a client computer, the first instruction including an ID of an interface of a mobile terminal APP, and the first instruction being used for instructing the mobile terminal to call the interface of the mobile terminal APP to process the resource.

A calling module 702 is configured to call the interface of the mobile terminal APP to process the resource by following the first instruction.

Optionally, the third receiving module 701 is configured to receive a second instruction sent from the client computer, the second instruction including the ID of the interface of the mobile terminal APP and the ID of the resource, and the second instruction being used for instructing the mobile terminal to call the interface of the mobile terminal APP to return a processed result of the resource.

The calling module 702 is further configured to call the interface of the mobile terminal APP to return the processed result of the resource, and sending the processed result of the resource to the client computer by following the second instruction.

Optionally, the device as shown in Fig. 10 may be provided in the mobile terminal 12 as shown in Fig. 1.

This embodiment of the present disclosure may include receiving a memory address of the resource and a first instruction returned from the server by a client computer, downloading the resource from the memory address of the resource, and sending the downloaded resource and the first instruction to the mobile terminal. After receiving the resource and the first instruction, the mobile terminal may, by following the first instruction, automatically call the interface corresponding to the ID of the interface of the mobile terminal APP to process the resource so as to finish the use of the resource. This can simplify operation steps involved from downloading of a mobile terminal resource to make use of the mobile terminal resource, thereby saving time for user.

Fig. 11 is a block diagram illustrating a mobile terminal (such as the mobile terminal 12 shown in Fig. 1 according to an exemplary embodiment of the present disclosure. Referring to Fig. 11, the mobile terminal may be used for implementing the method provided in the above embodiments. The following definitions are optionally.

The mobile terminal 800 may include: a communication unit 110, a memory 120 including one or more computer readable storage media, an input unit 130, a display unit 140, a sensor 150, an audio circuit 160, a WIFI (Wireless Fidelity) module 170, a processor 180 including one or more process cores, and a power source 190 and the like. Those skills of the present art may understand that the structure of the mobile terminal as shown in this drawing is not restrictive to the mobile terminal, and it may include more or less components than those in the figures, or a combination of some components, or different component arrangements.

The communication unit 110 may be configured to send and receive signals during sending and receiving information or in a process of phone calling. The communication unit 110 may be a network communication device such as a Radio Frequency (RF) circuit, a router, a modem and the like. In particular, if the communication unit 110 is the RF circuit, the communication unit 110 receives downlink information from a base station and then transmits the information to the one or more processors 180 to be processed, and transmits the related uplink data to the base station. Generally, the RF circuit served as the communication unit includes, but is not limited to, an antenna, at least one amplifier, a tuner, one or more oscillators, a Subscriber Identity Module (SIM) card, a transceiver, a coupler, a Low Noise Amplifier (LNA), a duplexer and the like. Additionally, the communication unit 110 may also communicate with a network or other devices via a wireless network. The wireless network may adopt any one of communication standard or protocol including, but not limited to, Global System of Mobile communication (GSM), General Packet Radio Service (GPRS), Code Division Multiple Access (CDMA), Wideband Code Division Multiple Access (WCDMA), Long Term Evolution (LTE), email, Short Messaging Service (SMS) and the like. The memory 120 may be configured to store programs and modules software programs and modules, which allow various types of functional applications and data processes to be performed when executed by the processor 180. The memory 120 may mainly include a program storage area and a data storage area. Wherein the program storage area may store an operating system, applications required by at least one required functions (such as voice play function, image play function and the like). The data storage area may store data (such as video data, phonebook data, and the like) created by the use of the mobile terminal 800. Besides, the memory 120 may include a high speed random access memory. The memory 120 may also include a nonvolatile memory (NVM), such as at least a magnetic disk storage device, flash memory or other nonvolatile solid-state storage device. Correspondingly, the memory 120 may also include a memory controller to control access to the memory 120 performed by the processor 180 and the input unit 130.

The input unit 130 may be configured to receive input numerical or character information and generate signal inputs of a keypad, a mouse, an operation rod, optical or trackball related to user settings and function control. Optionally, the input unit 130 may include a touch sensitive surface 131 and other input device 132. The touch sensitive surface 131, or a touch display screen or a track pad, may collect touch operation on or near it by the user (for example the user operations on or near the touch sensitive surface 721 with any kind of suitable objects or attachments such as the finger, touch pen, and the like), and drive the corresponding connection device according to a preset program. Optionally, the touch sensitive surface 131 may include two parts, i.e., a touch detecting device and a touch controller. The touch detecting device may detect the touch orientation of the user, and detect the signal caused by the touch operation, and then transmit the signal to the touch controller. The touch controller may receive the touch information from the touch detecting device and convert it into touch point coordinates and then transmit the coordinates to the processor 180 and can receive the command sent from the processor 760 to execute it. The touch controller also receives and performs instructions from the processor 180. Additionally, the touch sensitive surface 131 may be realized with various types such as resistive, capacitive, infrared, or surface acoustic wave and the like. The input unit 130 may also include other kind of input device 132 besides the input unit 130. Optionally, the other input device 132 may include, without limitation, one or more of a physical keypad, functional buttons (such as volume control button, switch button and the like), a trackball, a mouse, an operating rod and the like.

The display unit 140 may be configured to display various kinds of graphic user interfaces of information input by the user or provided to the user or the mobile terminal 800. These graphic user interfaces may be made up of graphics, texts, icons, videos and any other combination thereof. The display unit 730 may include a display panel 731, optionally, LCD (Liquid Crystal Display), OLED (Organic Light-Emitting Diode) or the like to assemble the display panel 141. Furthermore, the touch sensitive surface 131 may be configured to cover the display panel 141. When detecting the touch operation performed on or near the touch sensitive surface 131, the touch sensitive surface 131 may transmit signals to the processor 180 to determine the type of the touch event, then the processor 180 may provide a corresponding visual output on the display panel 141 according to the type of the touch event. Although in Fig. 11, the touch sensitive surface 721 and the display panel 731 are realizing the input and output functions as two independent components, they can be integrated together in some embodiment to realize the input and output functions.

The mobile terminal 800 may also include at least one sensor 150 such as a photo sensor, a motion sensor and other sensors. For example, the photo sensor may include an ambient light sensor and a proximity sensor. The ambient light sensor may adjust brightness of the display panel 141 according to intensity of the ambient light. The proximity sensor may close the display panel and/or backlight when the mobile terminal 800 is close to the user's ear. As one type of motion sensors, a gravitational acceleration sensor may detect values of accelerations in various directions (usually three axes); may detect a value and a direction of the gravitation when resting; and may be used in an application for identifying a mobile phone pose (such as switching between a landscape mode and a vertical mode, corresponding games, pose adjusting with a magnetometer), functions related to vibration (such as a pedometer, knocking) and the like. Other sensors such as a gyroscope, a barometer, a humidity meter, a thermometer, an infrared sensor and the like which may be arranged in the mobile terminal 800 will not be described in detail.

The audio circuit 160, a speaker 161, a microphone 162 may provide an audio interface between the user and the mobile terminal 800. The audio circuit 160 may convert the received audio data into electronic signals and transmit the electronic signals to the speaker 161, and the speaker 161 may convert the electronic signals into voice and output the voice. Additionally, the microphone 162 may convert the collected voice signals into electronic signals; the audio circuit 160 receives the electronic signals and converts them into audio data; and the audio data is transmitted to the processor 180 and then is transmitted to another terminal device via the RF circuit 110 after processed by the processor; or the audio data is transmitted to the memory 120 to be further processed. The audio circuit 160 may also include an earplug jack to allow communication between a peripheral earphone and the mobile terminal 800.

In order to achieve wireless communication, the mobile terminal may be provided with the wireless communication unit 170 which may be a WIFI module. WIFI is a short-range wireless transmission technology. The mobile terminal 800 may help the user transmit or receive E-mail, browse web pages and access streaming media and the like through the wireless communication unit 170, which provides the user the wireless broadband internet access. Although the wireless communication unit 170 is shown in the drawings, it should be understood that the wireless communication unit 170 is not a necessary component of the mobile terminal 800, and may be omitted without changing the substance of the present disclosure.

The processor 180 is a control center of the mobile terminal 800 using various interfaces and wires to connect respective portions of the whole client computer. By running or executing software programs and/or modules stored in the memory 120, calling data stored in the memory 120, and executing various functions of the mobile terminal 800 and processing data, the processor 180 proceeds overall monitoring to the mobile terminal. Optionally, the processor 180 may include one or more processing cores. Optionally, the processor 180 may integrate application processors and modem processors, wherein the application processors may mainly process the operation systems, the user interfaces, the application programs and the like, and the modem processors may mainly process wireless communications. It should be understood that the above modem may not be integrated into the processor 180.

The mobile terminal 800 may also include the power supply 190 (for example, a battery) to supply power to respective component. Optionally, the power supply may be logically connected with the processor 760 through a power supply management system, thereby realizing functions of managing charging, discharging, power consumption, and the like through the power supply management system. The power supply 190 may further include arbitrary components such as one or more DC or AC power supplies, a rechargeable system, a power supply malfunction detection circuit, a power supply converter or an inverter, a power supply state indicator and the like.

Although not shown, the mobile terminal 800 may also include a camera, a Bluetooth module, which will not described in detail. In this embodiment, the mobile terminal may also include a memory, and one or more programs stored in the memory, wherein the one or more programs are configured to be executed by one or more processors, and include instructions of performing operations of the following two aspects.

Receiving the resource and a first instruction sent from a client computer, by a mobile terminal, the first instruction including an ID of an interface of a mobile terminal APP, and the first instruction being used for instructing the mobile terminal to call the interface of the mobile terminal APP to process the resource; and calling the interface of the mobile terminal APP to process the resource by following the first instruction.

Optionally, the processor may further be configured to receive a second instruction sent from the client computer, the second instruction including the ID of the interface of the mobile terminal APP and the ID of the resource, and the second instruction being used for instructing the mobile terminal to call the interface of the mobile terminal APP to return a processed result of the resource; and call the interface of the mobile terminal APP to return the processed result of the resource, and send the processed result of the resource to the client computer by following the second instruction.

In addition, typically the mobile terminal described in the present disclosure may be various handheld mobile terminals. Therefore, the present disclosure is not intended to be limited to a certain type of mobile terminal.

In addition, the method according to the present disclosure may further be implemented by a CPU executable computer program. When the computer program is executed by the CPU, the above functions defined in the method of the present disclosure are executed.

In addition, the above steps in the method and the units in the system may be implemented by a controller and a computer readable storage device configured to store the computer programs for the controller to achieve the functions of the above steps or units.

In addition, it should be understood that, the computer readable storage device (for example, a memory) described by the present disclosure may be a volatile memory or a nonvolatile memory, or may include both of the volatile memory and the nonvolatile memory. As an example without limitation, the nonvolatile memory may include a read-only memory (ROM), a programmable ROM (PROM), an electrically programmable read-only memory ROM (EPROM), an electrically erasable programmable ROM (EEPROM) or a flash memory. The volatile memory may include a random access memory (RAM), which may function as an external cache memory. As an example without limitation, the RAM may be obtained in various kinds such as a synchronous RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM) and a directly Rambus RAM (DRRAM). The storage device in the disclosed aspect is intended to include but not to be limited by those and other proper types of memories.

It should be understood by those skilled in the art that, the various exemplary logic blocks, modules, circuits and algorithm steps described in conjunction with the disclosure herein may be implemented by electron hardware, computer software or the combination of both. In order to clearly explain the interchangeability of the hardware and the software, it has been generally illustrated with respect to the functions of the various exemplary members, blocks, modules, circuits and steps. Whether such functions are implemented by software or hardware depends on the specific application and the design restriction applied to the whole system.

By using the following components designed to execute the functions described herein, the various exemplary logic blocks, modules and circuits described in conjunction with the disclosure herein may carry out or execute: a general-purpose processor, a digital signal processor (DSP), a specific integrated circuit (ASIC), a field programmable gate array (FPGA) or other programmable logic devices, a discrete gate or transistor logic, a discrete hardware assemble or any combination of those components. The general-purpose processor may be a microprocessor. However, alternatively, the processor may be any of traditional processors, controllers, microcontrollers or state machines. The processor may also be implemented by a combination of the computing devices such as a combination of a DSP and a microprocessor, a plurality of microprocessors, one or more microprocessors in conjunction with DSP core, or any other those kind of configurations.

The method or algorithm steps described in conjunction with the disclosure herein may be directly included in the hardware, in the software modules executed by the processor or in the combination of both. The software modules may host in a RAM memory, a flash memory, a ROM memory, an EPROM memory, an EEPROM memory, a register, a hard disc, a movable disc, a CD-ROM, or any of other kind of storage medium known in the art. The exemplary storage media are coupled to the processor, so that the processor can read/write information from/to the storage media. In an alternative aspect, the storage media may be integrated with the processor. The processor and the storage media may host in an ASIC. The ASIC may host in a user terminal. In an alternative aspect, the processor and the storage media may host in a user terminal as a discrete assembly.

In one or more exemplary designs, the function may be implemented in hardware, software, firmware or any combinations thereof. If it is implemented in software, the function may be stored in the computer readable media or transferred via the computer readable media as one or more instructions or codes. The computer readable media may include a computer storage media and a communication media, wherein the communication media may include any medium which is helpful for transferring the computer program from one site to another site. The storage media may be any usable medium accessible by a general or dedicated computer. As an example without limitation, the computer readable media may include RAM, ROM, EEPROM, CD-ROM or other CD storage devices, disc storage devices or other magnetic storage devices, or may be any other media for carrying or storing the required program code in form of instructions or data structure accessible by a general or dedicated computer or a general or dedicated processor. In addition, any kind of connection may be properly referred as a computer readable medium. For example, if software is sent from a website, a server or other distant sources with a coaxial cable, an optical fiber cable, a twisted-pair, or a digital user line (DSL), or with the wireless technology such as infrared, radio wave or microwave, those above coaxial cable, optical fiber cable, twisted-pair, DSL or the wireless technology such as infrared, radio wave and microwave are all included in the definition of media. As used herein, the magnetic disk and optical disk may include a compact disk (CD), a laser disc, an optical disk, a digital versatile disk (DVD), a floppy disk or a blue-ray disk, wherein the magnetic disk usually represents data magnetically, and the optical disk usually represents data optically by using a laser. The combination of the above components may also be included within the meaning of computer readable media.

According to the functions of the method claims in the disclosed embodiments described herein, steps and/or actions are not executed in any specific sequence. In addition, although the element in the present disclosure may be described or required individually, it may be conceived as plural, unless being clearly defined as single.

The objects, technical solutions, and advantageous effects have been given with reference to the above embodiments. It should be understood the above description are only certain embodiments of the present disclosure, which are not intended to limit the present disclosure.

## Claims

1. A method for processing a mobile terminal resource, **characterized in that** the method comprises:
sending (101) a request for processing the resource to a server (10) by a client computer (11) based on a user command, the request for processing the resource comprising an ID of the resource and a process manner of the resource;
receiving (102) a memory address of the resource and a first instruction returned from the server (10), the first instruction comprising an ID of an interface of a mobile terminal application (APP), and the first instruction being used for instructing a mobile terminal to call (302) the interface of the mobile terminal APP to process the resource; and
downloading (103) the resource from the memory address of the resource, and sending the downloaded resource and the first instruction to the mobile terminal (12), so as to allow the mobile terminal (12) to call the interface of the mobile terminal APP to process the resource.

2. The method of claim 1, **characterized in that**, the downloading the resource from the memory address of the resource comprises:
scanning IDs of all mobile terminal APPs installed in the mobile terminal (12);
detecting (404) whether the mobile terminal APP has been installed in the mobile terminal by following the ID of the mobile terminal APP sent from the server (10); and
downloading (405) the resource from the memory address of the resource if the mobile terminal APP installed in the mobile terminal (12) is detected.

3. The method of claim 1 or 2, **characterized in that**, the method further comprises:
receiving (408) a second instruction sent from the server (10), the second instruction comprising the ID of the interface of the mobile terminal APP and the ID of the resource, and the second instruction being used for instructing the mobile terminal (12) to call (406) the interface of the mobile terminal APP to return a processed result of the resource; and
sending the second instruction to the mobile terminal (12), and sending (408) the processed result of the resource returned from the mobile terminal (12) to the server (10).

4. A method for processing a mobile terminal resource, **characterized in that** the method comprises:
receiving (301) the resource and a first instruction sent from a client computer (11), by a mobile terminal (12), the first instruction comprising an ID of an interface of a mobile terminal APP, and the first instruction being used for instructing the mobile terminal to call the interface of the mobile terminal APP to process the resource; and
calling (302) the interface of the mobile terminal APP to process the resource by following the first instruction.

5. The method of claim 4, wherein the method further comprises:
receiving (408) a second instruction sent from the client computer (11), the second instruction comprising the ID of the interface of the mobile terminal APP and the ID of the resource, and the second instruction being used for instructing the mobile terminal (12) to call the interface of the mobile terminal APP to return a processed result of the resource; and
calling (406) the interface of the mobile terminal APP to return the processed result of the resource, and sending the processed result of the resource to the client computer by following the second instruction.

6. An apparatus for processing a mobile terminal resource, **characterized in that** the apparatus comprises:
a sending module (501) configured to send a request for processing the resource to a server (10) based on a user command, the request for processing the resource comprising an ID of the resource and a process manner of the resource;
a first receiving module (502) configured to receive a memory address of the resource and a first instruction returned from the server, the first instruction comprising an ID of an interface of a mobile terminal APP to process the resource, and the first instruction being used for instructing a mobile terminal (12) to call the interface of the mobile terminal APP to process the resource; and
a downloading module (503) configured to download the resource from the memory address of the resource, and send the downloaded resource and the first instruction to the mobile terminal, so as to allow the mobile terminal to call the interface of the mobile terminal APP to process the resource.

7. The apparatus of claim 6, wherein the downloading module (503) is further configured to
scan IDs of all mobile terminal APPs installed in the mobile terminal (12), detect whether the mobile terminal APP is installed in the mobile terminal using the ID of the mobile terminal APP sent from the server (10), if the mobile terminal APP is detected installed in the mobile terminal, then download the resource from the memory address of the resource, and send the downloaded resource and the first instruction to the mobile phone so as to allow the mobile terminal call the interface of the mobile terminal APP to process the resource.

8. The apparatus of claim 6 or claim 7, wherein the first receiving module (502) is further configured to
receive the second instruction, which comprises the ID of the interface of the mobile terminal APP and the ID of the resource and is used for instructing the mobile terminal (12) to call the interface of the mobile terminal APP to return a processed result of the resource, sent from the server (10), send the second instruction to the mobile terminal, and then sends the processed result of the resource returned from the mobile terminal to the server.

9. An apparatus for processing a mobile terminal resource, **characterized in that** the apparatus comprises:
a third receiving module (701) configured to receive the resource and a first instruction sent from a client computer (11), the first instruction comprising an ID of an interface of a mobile terminal APP, and the first instruction being used for instructing the mobile terminal (12) to call the interface of the mobile terminal APP to process the resource; and
a calling module (702) configured to call the interface of the mobile terminal APP to process the resource by following the first instruction.

10. The apparatus of claim 9, wherein the third receiving module (701) is further configured to
receive a second instruction sent from the client computer (11), the second instruction comprising the ID of the interface of the mobile terminal APP and the ID of the resource, and the second instruction being used for instructing the mobile terminal to call the interface of the mobile terminal APP to return a processed result of the resource; and
the calling module (702) is further configured to
call the interface of the mobile terminal APP to return the processed result of the resource, and send the processed result of the resource to the client computer by following the second instruction.

11. A client computer (11), **characterized in that** the client computer comprises a processor, a memory, and one or more programs, wherein the one or more programs are stored in the memory and are configured to be executed by one or more the processors, the one or more programs comprising instructions for the performing the method as claimed in any of claims 1 to 3.

12. A mobile terminal (12), **characterized in that** the mobile terminal comprises a processor, a memory, and one or more programs, wherein the one or more programs are stored in the memory and are configured to be executed by one or more the processors, the one or more programs comprising instructions for the performing the method as claimed in claim 4 or claim 5.

13. A program product having stored therein instructions that, when executed by one or more processors of the mobile terminal (12) according to claim 12, causes the mobile terminal to perform:
receiving the resource and a first instruction sent from a client computer (11), the first instruction comprising an ID of an interface of a mobile terminal APP, and the first instruction being used for instructing the mobile terminal to call the interface of the mobile terminal APP to process the resource; and
calling the interface of the mobile terminal APP to process the resource by following the first instruction.

14. A computer program which when executing on a processor, performs the method according to any one of claims 1 to 3, or claims 4 to 5.

## Patentansprüche

1. Verfahren zur Verarbeitung einer Ressource eines mobilen Endgeräts, **dadurch gekennzeichnet, dass** das Verfahren umfasst:
Senden (101), durch einen Client-Computer (11), einer Anforderung zur Verarbeitung der Ressource an einen Server (10), basierend auf einem Benutzerbefehl, wobei die Anforderung zur Verarbeitung der Ressource eine ID der Ressource und eine Verarbeitungsweise der Ressource umfasst;
Empfangen (102) einer Speicheradresse der Ressource und einer ersten Anweisung, die von dem Server (10) zurück gegeben wurde, wobei die erste Anweisung eine ID einer Schnittstelle einer Anwendung eines mobilen Endgeräts (APP) umfasst und die erste Anweisung dazu verwendet wird, ein mobiles Endgerät anzuweisen, die Schnittstelle der APP des mobilen Endgeräts anzurufen (302), um die Ressource zu verarbeiten; und
Herunterladen (103) der Ressource von der Speicheradresse der Ressource, und Senden der herunter geladenen Ressource sowie der ersten Anweisung an das mobile Endgerät (12), um dem mobilen Endgerät (12) zu ermöglichen, die Schnittstelle der APP des mobilen Endgeräts anzurufen, um die Ressource zu verarbeiten.

2. Verfahren gemäß Anspruch 1, **dadurch gekennzeichnet, dass** das Herunterladen der Ressource von der Speicheradresse der Ressource umfasst:
Scannen der IDs aller APPs des mobilen Endgeräts, die auf dem mobilen Endgerät (12) gespeichert sind;
Ermitteln (404), ob die APP des mobilen Endgeräts auf dem mobilen Endgerät installiert worden ist durch Folgen der ID der APP des mobilen Endgeräts, die von dem Server (10) gesendet wurde; und
Herunterladen (405) der Ressource von der Speicheradresse der Ressource, wenn ermittelt wurde, dass die APP des mobilen Endgeräts auf dem mobilen Endgerät (12) installiert worden ist.

3. Verfahren gemäß Anspruch 1 oder 2, **dadurch gekennzeichnet, dass** das Verfahren weiterhin umfasst:
Empfangen (408) einer zweiten Anweisung, die von dem Server (10) gesendet wurde, wobei die zweite Anweisung die ID der Schnittstelle der APP des mobilen Endgeräts sowie die ID der Ressource umfasst und die zweite Anweisung dazu verwendet wird, das mobile Endgerät (12) anzuweisen, die Schnittstelle der APP des mobilen Endgeräts anzurufen (406), um ein verarbeitetes Ergebnis der Ressource zurück zu geben; und
Senden der zweiten Anweisung an das mobile Endgerät (12) und Senden (408) des verarbeiteten Ergebnisses der Ressource, das von dem mobilen Endgerät (12) an den Server (10) zurück gegeben wurde.

4. Verfahren zur Verarbeitung einer Ressource eines mobilen Endgeräts, **dadurch gekennzeichnet, dass** das Verfahren umfasst:
Empfangen (301) der Ressource und einer ersten Anweisung, die von einem Client-Computer (11) gesendet wurden, durch ein mobiles Endgerät (12), wobei die erste Anweisung eine ID einer Schnittstelle einer APP eines mobilen Endgeräts umfasst und die erste Anweisung dazu verwendet wird, das mobile Endgerät anzuweisen, die Schnittstelle der APP des mobilen Endgeräts anzurufen, um die Ressource zu verarbeiten; und
Anrufen (302) der Schnittstelle der APP des mobilen Endgeräts, um die Ressource zu verarbeiten durch Folgen der ersten Anweisung.

5. Verfahren gemäß Anspruch 4, wobei das Verfahren weiterhin umfasst:
Empfangen (408) einer zweiten Anweisung, die von dem Client-Computer (11) gesendet wurde, wobei die zweite Anweisung die ID der Schnittstelle der APP des mobilen Endgeräts sowie die ID der Ressource umfasst und die zweite Anweisung dazu verwendet wird, das mobile Endgerät (12) anzuweisen, die Schnittstelle der APP des mobilen Endgeräts anzurufen, um ein verarbeitetes Ergebnis der Ressource zurück zu geben; und
Anrufen (406) der Schnittstelle der APP des mobilen Endgeräts, um das verarbeitete Ergebnis der Ressource zurück zu geben, sowie Senden des verarbeiteten Ergebnisses der Ressource an den Client-Computer durch Folgen der zweiten Anweisung.

6. Vorrichtung zur Verarbeitung einer Ressource eines mobilen Endgeräts, **dadurch gekennzeichnet, dass** die Vorrichtung umfasst:
ein Sendemodul (501), das dazu konfiguriert ist, eine Anforderung zur Verarbeitung der Ressource an einen Server (10) basierend auf einem Benutzerbefehl zu senden, wobei die Anforderung zur Verarbeitung der Ressource eine ID der Ressource und eine Verarbeitungsweise umfasst;
ein erstes Empfangsmodul (502), das dazu konfiguriert ist, einer Speicheradresse der Ressource und eine erste Anweisung, die von dem Server (10) zurück gegeben wurde, zu empfangen, wobei die erste Anweisung eine ID einer Schnittstelle einer APP eines mobilen Endgeräts, um die Ressource zu verarbeiten, umfasst und die erste Anweisung dazu verwendet wird, ein mobiles Endgerät (12) anzuweisen, die Schnittstelle der APP des mobilen Endgeräts anzurufen, um die Ressource zu verarbeiten; und
ein Herunterlademodul (503), das dazu konfiguriert ist, die Ressource von der Speicheradresse der Ressource herunter zu laden und die herunter geladene Ressource sowie die erste Anweisung an das mobile Endgerät zu senden, um dem mobilen Endgerät zu ermöglichen, die Schnittstelle der APP des mobilen Endgeräts anzurufen, um die Ressource zu verarbeiten.

7. Vorrichtung gemäß Anspruch 6, wobei das Herunterlademodul (503) weiterhin dazu konfiguriert ist,
die IDs aller APPs des mobilen Endgeräts, die auf dem mobilen Endgerät (12) installiert sind, zu scannen, zu ermitteln, ob die APP des mobilen Endgeräts auf dem mobilen Endgerät installiert ist durch Verwenden der ID der APP des mobilen Endgeräts, die von dem Server (10) gesendet wurde, wenn ermittelt wird, dass die APP des mobilen Endgeräts auf dem mobilen Endgerät installiert ist, dann Herunterladen der Ressource von der Speicheradresse der Ressource und Senden der herunter geladenen Ressource sowie der ersten Anweisung an das mobile Endgerät, um dem mobilen Endgerät zu ermöglichen, die Schnittstelle der APP des mobilen Endgeräts anzurufen, um die Ressource zu verarbeiten.

8. Vorrichtung gemäß Anspruch 6 oder Anspruch 7, wobei das erste Empfangsmodul (502) weiterhin dazu konfiguriert ist,
die zweite Anweisung zu empfangen, welche die ID der Schnittstelle der APP des mobilen Endgeräts sowie die ID der Ressource umfasst und dazu verwendet wird, das mobile Endgerät (12) anzuweisen, die Schnittstelle der APP des mobilen Endgeräts anzurufen, um ein verarbeitetes Ergebnis der Ressource, das von dem Server (10) gesendet wurde, zurück zu geben, die zweite Anweisung an das mobile Endgerät zu senden und dann das verarbeitete Ergebnis der Ressource, das von dem mobilen Endgerät zurück gegeben wurde, an den Server zu senden.

9. Vorrichtung zur Verarbeitung einer Ressource eines mobilen Endgeräts, **dadurch gekennzeichnet, dass** die Vorrichtung umfasst:
ein drittes Empfangsmodul (701), das dazu konfiguriert ist, die Ressource und eine erste Anweisung, die von einem Client-Computer (11) gesendet wurden, zu empfangen, wobei die erste Anweisung eine ID einer Schnittstelle einer APP eines mobilen Endgeräts umfasst und die erste Anweisung dazu verwendet wird, das mobile Endgerät (12) anzuweisen, die Schnittstelle der APP des mobilen Endgeräts anzurufen, um die Ressource zu verarbeiten; und
ein Anrufmodul (702), das dazu konfiguriert ist, die Schnittstelle der APP des mobilen Endgeräts anzurufen, um die Ressource zu verarbeiten durch Folgen der ersten Anweisung.

10. Vorrichtung gemäß Anspruch 9, wobei das dritte Empfangsmodul (701) weiterhin dazu konfiguriert ist,
eine zweite Anweisung, die von dem Client-Computer (11) gesendet wurde, zu empfangen, wobei die zweite Anweisung die ID der Schnittstelle der APP des mobilen Endgeräts sowie die ID der Ressource umfasst und die zweite Anweisung dazu verwendet wird, das mobile Endgerät anzuweisen, die Schnittstelle der APP des mobilen Endgeräts anzurufen, um ein verarbeitetes Ergebnis der Ressource zurück zu geben; und
das Anrufmodul (702) weiterhin dazu konfiguriert ist,
die Schnittstelle der APP des mobilen Endgeräts anzurufen, um ein verarbeitetes Ergebnis der Ressource zurück zu geben und das verarbeitete Ergebnis der Ressource an den Client-Computer durch Folgen der zweiten Anweisung zu senden.

11. Client-Computer (11), der **dadurch gekennzeichnet ist, dass** der Client-Computer einen Prozessor, einen Speicher und ein oder mehrere Programme umfasst, wobei das eine oder die mehreren Programme in dem Speicher gespeichert sind und dazu konfiguriert sind, von einem oder mehreren Prozessoren ausgeführt zu werden, wobei das eine oder die mehreren Programme Anweisungen zur Durchführung des Verfahrens gemäß einem der Ansprüche 1 bis 3 umfassen.

12. Mobiles Endgerät (12), das **dadurch gekennzeichnet ist, dass** das mobile Endgerät einen Prozessor, einen Speicher und ein oder mehrere Programme umfasst, wobei das eine oder die mehreren Programme in dem Speicher gespeichert sind und dazu konfiguriert sind, von einem oder mehreren Prozessoren ausgeführt zu werden, wobei das eine oder die mehreren Programme Anweisungen zur Durchführung des Verfahrens gemäß einem der Ansprüche 4 bis 5 umfassen.

13. Programmprodukt, auf dem Anweisungen gespeichert sind, die, wenn sie von einem oder mehreren Prozessoren des mobilen Endgeräts (12) gemäß Anspruch 12 durchgeführt werden, das mobile Endgerät zur Durchführung der folgenden Schritte veranlassen:
Empfangen der Ressource und einer ersten Anweisung, die von einem Client-Computer (11) gesendet wurden, wobei die erste Anweisung eine ID einer Schnittstelle einer APP eines mobilen Endgeräts umfasst und die erste Anweisung dazu verwendet wird, das mobile Endgerät anzuweisen, die Schnittstelle der APP des mobilen Endgeräts anzurufen, um die Ressource zu verarbeiten; und
Anrufen der Schnittstelle der APP des mobilen Endgeräts, um die Ressource zu verarbeiten durch Folgen der ersten Anweisung.

14. Computerprogramm, das, wenn es in einem Prozessor ausgeführt wird, das Verfahren gemäß einem der Ansprüche 1 bis 3 oder einem der Ansprüche 4 bis 5 ausführt.

## Revendications

1. Procédé pour traiter une ressource de terminal mobile, **caractérisé en ce que** le procédé comprend :
l'envoi (101) d'une demande pour traiter la ressource à un serveur (10) par un ordinateur client (11) sur la base d'une commande d'utilisateur, la demande pour traiter la ressource comprenant un ID de la ressource et une manière de traitement de la ressource ;
la réception (102) d'une adresse de mémoire de la ressource et d'une première instruction retournée depuis le serveur (10), la première instruction comprenant un ID d'une interface d'une application (APP) de terminal mobile, et la première instruction étant utilisée pour donner pour instruction à un terminal mobile d'appeler (302) l'interface de l'APP de terminal mobile pour traiter la ressource ; et
le téléchargement (103) de la ressource à partir de l'adresse de mémoire de la ressource, et l'envoi de la ressource téléchargée et de la première instruction au terminal mobile (12), de façon à permettre au terminal mobile (12) d'appeler l'interface de l'APP de terminal mobile pour traiter la ressource.

2. Procédé selon la revendication 1, **caractérisé en ce que**, le téléchargement de la ressource à partir de l'adresse de mémoire de la ressource comprend :
le scannage d'ID de toutes les APP de terminal mobile installées dans le terminal mobile (12) ;
la détection (404) de si l'APP de terminal mobile a été installée dans le terminal mobile en suivant l'ID de l'APP de terminal mobile envoyé depuis le serveur (10) ; et
le téléchargement (405) de la ressource à partir de l'adresse de mémoire de la ressource si l'APP de terminal mobile installée dans le terminal mobile (12) est détectée.

3. Procédé selon la revendication 1 ou 2, **caractérisé en ce que**, le procédé comprend en outre :
la réception (408) d'une seconde instruction envoyée depuis le serveur (10), la seconde instruction comprenant l'ID de l'interface de l'APP de terminal mobile et l'ID de la ressource, et la seconde instruction étant utilisée pour donner pour instruction au terminal mobile (12) d'appeler (406) l'interface de l'APP de terminal mobile pour retourner un résultat traité de la ressource ; et
l'envoi de la seconde instruction au terminal mobile (12), et l'envoi (408) du résultat traité de la ressource retourné depuis le terminal mobile (12) au serveur (10).

4. Procédé pour traiter une ressource de terminal mobile, **caractérisé en ce que** le procédé comprend :
la réception (301) de la ressource et d'une première instruction envoyée depuis un ordinateur client (11), par un terminal mobile (12), la première instruction comprenant un ID d'une interface d'une APP de terminal mobile, et la première instruction étant utilisée pour donner pour instruction au terminal mobile d'appeler l'interface de l'APP de terminal mobile pour traiter la ressource ; et
l'appel (302) de l'interface de l'APP de terminal mobile pour traiter la ressource en suivant la première instruction.

5. Procédé selon la revendication 4, dans lequel le procédé comprend en outre :
la réception (408) d'une seconde instruction envoyée depuis l'ordinateur client (11), la seconde instruction comprenant l'ID de l'interface de l'APP de terminal mobile et l'ID de la ressource, et la seconde instruction étant utilisée pour donner pour instruction au terminal mobile (12) d'appeler l'interface de l'APP de terminal mobile pour retourner un résultat traité de la ressource ; et
l'appel (406) de l'interface de l'APP de terminal mobile pour retourner le résultat traité de la ressource, et l'envoi du résultat traité de la ressource à l'ordinateur client en suivant la seconde instruction.

6. Appareil pour traiter une ressource de terminal mobile, **caractérisé en ce que** l'appareil comprend :
un module d'envoi (501) configuré pour envoyer une demande pour traiter la ressource à un serveur (10) sur la base d'une commande d'utilisateur, la demande pour traiter la ressource comprenant un ID de la ressource et une manière de traitement de la ressource ;
un premier module de réception (502) configuré pour recevoir une adresse de mémoire de la ressource et une première instruction retournée depuis le serveur, la première instruction comprenant un ID d'une interface d'une APP de terminal mobile pour traiter la ressource, et la première instruction étant utilisée pour donner pour instruction à un terminal mobile (12) d'appeler l'interface de l'APP de terminal mobile pour traiter la ressource ; et
un module de téléchargement (503) configuré pour télécharger la ressource à partir de l'adresse de mémoire de la ressource, et envoyer la ressource téléchargée et la première instruction au terminal mobile, de façon à permettre au terminal mobile d'appeler l'interface de l'APP de terminal mobile pour traiter la ressource.

7. Appareil selon la revendication 6, dans lequel le module de téléchargement (503) est en outre configuré pour
scanner des ID de toutes les APP de terminal mobile installées dans le terminal mobile (12), détecter si l'APP de terminal mobile est installée dans le terminal mobile en utilisant l'ID de l'APP de terminal mobile envoyé depuis le serveur (10), si l'APP de terminal mobile est détectée installée dans le terminal mobile, télécharger alors la ressource à partir de l'adresse de mémoire de la ressource, et envoyer la ressource téléchargée et la première instruction au téléphone mobile de façon à permettre au terminal mobile d'appeler l'interface de l'APP de terminal mobile pour traiter la ressource.

8. Appareil selon la revendication 6 ou la revendication 7, dans lequel le premier module de réception (502) est en outre configuré pour
recevoir la seconde instruction, qui comprend l'ID de l'interface de l'APP de terminal mobile et l'ID de la ressource et est utilisée pour donner pour instruction au terminal mobile (12) d'appeler l'interface de l'APP de terminal mobile pour retourner un résultat traité de la ressource, envoyé depuis le serveur (10), envoyer la seconde instruction au terminal mobile, et envoyer ensuite le résultat traité de la ressource retourné depuis le terminal mobile au serveur.

9. Appareil pour traiter une ressource de terminal mobile, **caractérisé en ce que** l'appareil comprend :
un troisième module de réception (701) configuré pour recevoir la ressource et une première instruction envoyée depuis un ordinateur client (11), la première instruction comprenant un ID d'une interface d'une APP de terminal mobile, et la première instruction étant utilisée pour donner pour instruction au mobile terminal (12) d'appeler l'interface de l'APP de terminal mobile pour traiter la ressource ; et
un module d'appel (702) configuré pour appeler l'interface de l'APP de terminal mobile pour traiter la ressource en suivant la première instruction.

10. Appareil selon la revendication 9, dans lequel le troisième module de réception (701) est en outre configuré pour
recevoir une seconde instruction envoyée depuis l'ordinateur client (11), la seconde instruction comprenant l'ID de l'interface de l'APP de mobile terminal et l'ID de la ressource, et la seconde instruction étant utilisée pour donner pour instruction au terminal mobile d'appeler l'interface de l'APP de terminal mobile pour retourner un résultat traité de la ressource ; et
le module d'appel (702) est en outre configuré pour appeler l'interface de l'APP de terminal mobile pour retourner le résultat traité de la ressource, et envoyer le résultat traité de la ressource à l'ordinateur client en suivant la seconde instruction.

11. Ordinateur client (11), **caractérisé en ce que** l'ordinateur client comprend un processeur, une mémoire, et un ou plusieurs programmes, dans lequel les un ou plusieurs programmes sont stockés dans la mémoire et sont configurés pour être exécutés par un ou plusieurs processeurs, les un ou plusieurs programmes comprenant des instructions pour effectuer le procédé selon l'une quelconque des revendications 1 à 3.

12. Terminal mobile (12), **caractérisé en ce que** le terminal mobile comprend un processeur, une mémoire, et un ou plusieurs programmes, dans lequel les un ou plusieurs programmes sont stockés dans la mémoire et sont configurés pour être exécutés par un ou plusieurs processeurs, les un ou plusieurs programmes comprenant des instructions pour effectuer le procédé selon la revendication 4 ou la revendication 5.

13. Produit de programme dans lequel sont stockées des instructions qui, lorsqu'elles sont exécutées par un ou plusieurs processeurs du terminal mobile (12) selon la revendication 12, amènent le terminal mobile à effectuer :
la réception de la ressource et d'une première instruction envoyée depuis un ordinateur client (11), la première instruction comprenant un ID d'une interface d'une APP de terminal mobile, et la première instruction étant utilisée pour donner pour instruction au terminal mobile d'appeler l'interface de l'APP de terminal mobile pour traiter la ressource ; et
l'appel de l'interface de l'APP de terminal mobile pour traiter la ressource en suivant la première instruction.

14. Programme informatique qui, lors de l'exécution sur un processeur, effectue le procédé selon l'une quelconque des revendications 1 à 3, ou des revendications 4 à 5.
